Europäisches Patentamt

European Patent Office

Office européen des brevets

(11) Publication number: **0 196 916**
**B1**

# (12) EUROPEAN PATENT SPECIFICATION

(45) Date of publication of patent specification: **18.10.89**

(21) Application number: **86302415.4**

(22) Date of filing: **01.04.86**

(51) Int. Cl.⁴: **G 21 C 3/32**

(54) Reusable locking tube in a reconstitutable fuel assembly.

(30) Priority: **02.04.85 US 719108**

(43) Date of publication of application:
**08.10.86 Bulletin 86/41**

(45) Publication of the grant of the patent:
**18.10.89 Bulletin 89/42**

(84) Designated Contracting States:
**BE DE FR GB IT SE**

(56) References cited:
**EP-A-0 041 014**
**EP-A-0 098 774**
**EP-A-0 140 588**
**EP-A-0 182 149**
**FR-A-2 493 024**

(73) Proprietor: **WESTINGHOUSE ELECTRIC
CORPORATION**
**Westinghouse Building Gateway Center
Pittsburgh Pennsylvania 15235 (US)**

(72) Inventor: **Shallenberger, John Milton
120 W. Chapel Ridge Road
Pittsburgh Pennsylvania (US)**
Inventor: **Ferlan, Stephen Joseph
895 Rita Drive
Pittsburgh Pennsylvania (US)**

(74) Representative: **van Berlyn, Ronald Gilbert
23, Centre Heights
London, NW3 6JG (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates generally to fuel assemblies for nuclear reactors and, more particularly, to re-usable locking tubes for releasably locking the top nozzle of such assembly in position on upper portions of control-rod guide thimbles thereof.

In most nuclear reactors, the reactor core is composed of a large number of elongate fuel assemblies each including a plurality of fuel rods and control rod guide thimbles which are held in an organized array by means of grids spaced along the fuel assembly and attached to the control rod guide thimbles, and top and bottom nozzles which are secured to opposite end portions of the guide thimbles extending slightly above and below the fuel rods. At the top end of the fuel assembly, the guide thimbles extend into passageways formed in the adapter plate of the top nozzle and these are affixed to the latter. The guide thimbles may each include an upper sleeve for attachment to the top nozzle.

During operation of a fuel assembly in a nuclear reactor, some of the fuel rods may occasionally develop cracks due primarily to internal stresses, in which event there is the risk of radioactive fission products seeping into the primary coolant during operation of the reactor, and of radioactive fission products being released into a flooded reactor cavity during refueling or into the coolant circulated through pools where spent fuel assemblies are stored. In order to eliminate this risk, it is desirable to detect, remove and replace failed fuel rods. This is a difficult and costly undertaking if the fuel assembly involved has its guide thimbles welded to the top and bottom nozzles, thereby necessitating the removal of the fuel assembly from the nuclear reactor core and the breaking of the welds in order to gain access to the fuel rods.

Therefore, considerable interest has arisen in fuel assemblies made reconstitutable by providing them with removable top nozzles. One such reconstitutable fuel assembly is illustrated and described in European patent publication No. 0140588 falling within the terms of EPC Art. 54(3) and published May 8, 1985, which discloses an attaching structure for removably mounting the top nozzle on the upper ends of the control-rod guide thimbles. The attaching structure includes a plurality of outer sockets defined in the adapter plate of the top nozzle, a plurality of inner sockets formed on upper end portions of the respective guide thimbles, and a plurality of removable locking tubes inserted in the inner sockets to maintain them in locking engagement with the outer sockets. Each outer socket is in the form of a passageway through the adapter plate which has an annular groove formed in the wall thereof. Each inner socket is in the form of a hollow upper end portion of the guide thimble having an annular bulge which seats in the annular groove when the guide thimble end portion is inserted in the adapter plate passageway. The guide thimble upper end portion has elongate axial slots formed therein to permit inward elastic collapse of the slotted portion so as to allow the bulge to be engaged with and disengaged from the annular circumferential groove in the passageway of the adapter plate. In such manner, the inner socket of the guide thimble is inserted into and withdrwn from locking engagement with the outer socket.

The locking tube is inserted from above the top nozzle into a locking position in the hollow upper end portion of the guide thimble forming the inner socket. When inserted in its locking position, the locking tube retains the bulge of the inner socket in its expanded locking engagement with the annular groove and thus prevents the inner socket from being moved to a compressed releasing position in which it could be withdrawn from the outer socket. In this manner, the locking tubes maintain the inner sockets in locking engagement with the outer sockets, and thereby the attachment of the top nozzle on the upper ends of the guide thimbles.

In order to prevent inadvertent escape due to vibration and the like, the locking tubes are secured in their locking positions which heretofore has been done, after insertion of the locking tubes into their locking positions within the inner sockets, by deforming an upper portion of each locking tube so as to form therein a bulge fit into the circumferential bulge in the upper end portion of the guide thimble and provide an interference fit therewith. Also according to EP—A—0182149 falling within the terms of EPC Art. 54(3), each locking tube is provided with dimples or a circumferential bulge engaged in the annular hollow on the inside of the bulge of the associated inner socket when the locking tube is fully inserted in the inner socket.

Another arrangement for securing a locking tube in its locking position within the upper end of a guide thimble and the passageway of the adapter plate is disclosed in French Patent No. 2,529,704, wherein a number of crimps are formed between the locking ring or tube upper portion and the wall of the bore through the endpiece or adapter plate. Each crimp is composed of a "flat spot" on the wall of the locking ring or tube and an annular groove located facing and interacting with the flat spot. The annular groove is formed in the wall of the bore through the endpiece or adapter plate. The crimps are located above another larger concave annular groove in the adapter plate passageway which receives the circumferentially enlarged, slotted upper end portion of the guide thimble. It is believed that the crimps are formed by plastic deformation of the locking tube wall after the locking tube has been inserted into its locking position within the endpiece or adapter plate.

Then, when reconstitution of the fuel assembly is undertaken, these locking tubes must first be withdrawn by exerting axial force to overcome the interference fit. This partially collapses the locking tube bulges and "flat spots", having been earlier formed by plastic deformation, as the locking tubes are removed from the guide thimble upper end portions and the adapter plate passageways. After the failed fuel rods have been removed and replaced, and the following remounting of the top nozzle, the common practice is to discard the old locking tubes with the partially collapsed bulges and "flat spots" and install a full complement of new locking tubes on the guide thimble upper ends and secure them by plastic deformation.

This practice has a number of disadvantages. First, a large inventory of locking tubes must be maintained. Second, provision must be made for disposal of the discarded irradiated locking tubes. Third, after each locking tube is inserted, a deforming operation must be carried out remotely to produce the bulges in each tube. And, fourth, an inspection of bulges must be carried out remotely to ascertain whether the bulges were made to the correct dimension.

It is the principal object of the invention to obviate these drawbacks, and the invention accordingly resides in an arrangement for releasably affixing the top nozzle of a reconstitutable nuclear fuel assembly to an upper end portion of a guide thimble according to claim 1.

The use of re-usable locking tubes such as the one defined above improves the reconstitution operation in several ways. First, it reduces the time required to reconstitute the fuel assembly by eliminating the locking tube deforming operation previously necessary after remounting of the top nozzle, and by eliminating the need to inspect the local deformations or bulges. Second, since the locking tubes are re-used, no provisions need be made for the disposal of replaced, irradiated locking tubes. Third, there is no further need for a locking-tube deforming tool, for bulge inspection apparatus, for an inventory of replacement locking-tubes, and for canisters and associated tooling otherwise required in handling used locking tubes. Fourth, during manufacture, assembly time can be reduced due to the elimination of locking tube deforming after insertion by the deletion of the bulge dimension inspection. Fifth, a lower inventory of locking tubes at the manufacturing site is also possible since top nozzles which occasionally must be removed after mounting can now utilize the originally inserted locking tubes. To summarize, by the simple design change in the locking tube concept contemplated by the present invention, the reconstitutable fuel assembly manufacturing process is simplified and easier, and a more trouble-free removal and remounting of the top nozzle during reconstitution is achieved with the result that the reconstitution operation as a whole can be performed more efficiently and reliably. The re-usable locking tubes of the present invention can also be backfitted on existing reconstitutable fuel assemblies.

A preferred embodiment of the invention will now be described by way of example only, with reference to the accompanying drawings, in which:

Figure 1 is a side elevational view, with parts partially sectioned and broken away for purposes of clarity, of a reconstitutable fuel assembly;

Figure 2 is a sectioned, exploded view of the components of the attaching structure associated with the top nozzle and the guide thimbles of the reconstitutable fuel assembly and including a re-usable locking tube embodying the invention;

Figure 3 is a top plan view, as seen along line III—III of Fig. 2 of the upper end of a control-rod guide thimble.

Figure 4 is a side elevational view of the re-usable locking tube;

Figure 5 is a top plan view, as seen along line V—V of Fig. 4;

Figure 6 is an enlarged fragmentary view showing the re-usable locking tube of Fig. 2 flared outward adjacent the upper end thereof; and

Figure 7 is a sectional view of the components of the attaching structure of Fig. 2 in their assembled condition.

In the following description, like reference characters designate like or corresponding parts throughout the several views, and term such as "forward", "rearward", "left", "right", "upwardly", "downwardly", and the like are employed as words of convenience not to be construed as limiting terms.

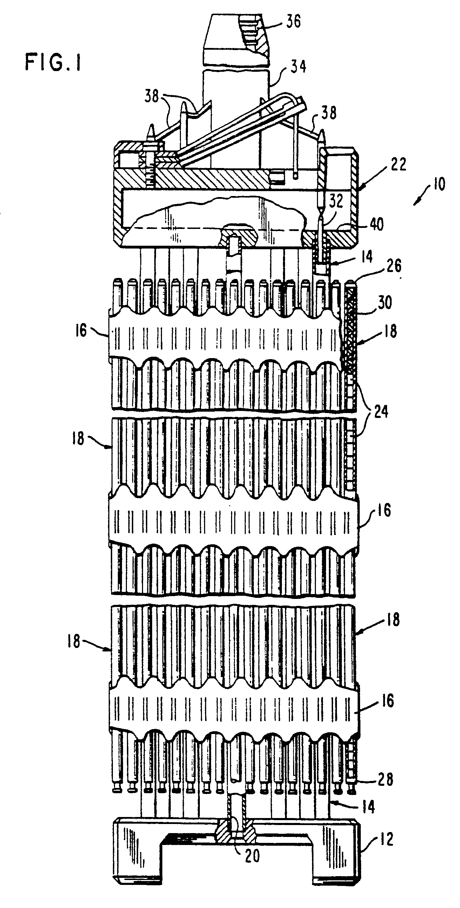

Referring now to the drawings, and particularly to Fig. 1, the reconstitutable nuclear reactor fuel assembly shown therein in vertically foreshortened form and generally designated with numeral 10 comprises a lower end structure or bottom nozzle 12 for supporting the assembly on the lower core plate (not shown) in the core region of a reactor (not shown), several control-rod guide tubes or thimbles 14 extending upward from the bottom nozzle 12, transverse grids 16 axially spaced along the guide thimbles 14, an organized array of fuel rods 18 transversely spaced and supported by the grids 16, an instrumentation tube 20, and an upper end structure or top nozzle 22 removably attached to the upper ends of the guide thimbles 14.

Each fuel rod 18 contains nuclear fuel pellets 24 and has its opposite ends hermetically sealed by means of end plugs 26, 28. A plenum spring 30 disposed between the upper end plug 26 and the pellets 24 maintains the latter firmly stacked.

The top nozzle 22 includes a control-rod cluster control mechanism 34 with an internally threaded cylindrical member 36 having flukes or arms 38 radially extending therefrom and carrying control rods 32 which extend into the guide thimbles 14 and are movable therein to control the fission process, as well known in the art.

As illustrated in Fig. 1, the top nozzle 22 has a lower adapter plate 40 with a plurality of control-rod passageways 42 (only one being shown) formed therethrough and upper end portions 44 of the guide thimbles 14 positioned within the respective passageways 42. In order to render the fuel rods 18 accessible, the top nozzle 22 is removably connected to the upper end portions 44 of the guide thimbles 14 by means of an attaching structure generally designated 46.

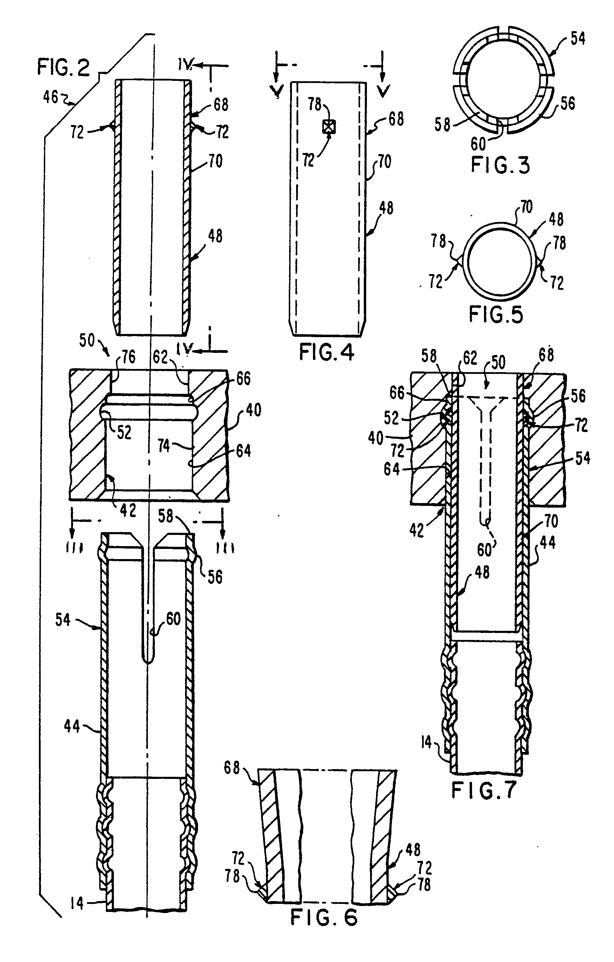

With particular reference to Figs. 2 to 7, the top nozzle attaching structure 46 associated with each guide thimble 14 comprises an outer socket 50 defined in the top nozzle adapter plate 40 by the associated passageway 42 having an annular groove 52 formed circumferentially in the wall thereof, and an inner socket 54 formed on the upper end portion 44 of the respective guide thimble 14, and a removable locking tube 48 inserted in the inner socket 54 to maintain it in locking engagement with the outer socket 50.

Each inner socket 54 is defined by an annular bulge 56 formed circumferentially on the hollow upper end portion 44 of the guide thimble 14 only a short distance below its upper edge 58. A plurality of, such as four, elongate axial slots 60 are formed in the upper end portion 44 of the guide thimble 14 to permit elastic inward collapse or compression of the slotted end portion enabling the circumferential bulge 56 thereon to be engaged with and disengaged from the annular groove 52.

Each passageway 42 in the adapter plate 40 defining an outer socket 50 consists of an upper bore 62 and a lower bore 64. The lower bore 64 is of considerably greater axial length than the upper bore 62 and has and annular groove 52 formed in its wall a short distance below a ledge 66 between the upper and lower bores 62, 64. The lower bore 64 has a larger diameter than the upper bore 62 so that the ledge 66 faces downward. The ledge 66 serves primarily as a stop which engages the upper end 58 of the guide-thimble end portion 44 when the bulge 56 on the inner socket 54 is in registry with the annular groove 52 in the outer socket 50, as seen from Fig. 7.

Once the top nozzle 22 is mounted on the guide-thimble end portions 44 and the bulges 56 on the inner sockets 54 are seated in the annular grooves 52 of the outer sockets 50, the locking tubes 48 are inserted, from above the top nozzle, into the respective inner sockets 54 so as to lock the bulges 56 against disengagement thereof from the grooves 52 and, hence, lock the inner sockets 54 against withdrawal thereof from the outer sockets 50, likewise as seen from Fig. 7.

One way heretofore employed to secure inserted locking tubes against accidental escape from their locking positions within the inner sockets is to provide them initially with outwardly flared upper ends, as shown in Fig. 6. Upon insertion of such locking tube into an inner socket, the outwardly flared end of the locking tube will form a firm friction fit with the wall of the inner socket and thereby will impede axial displacement of the locking tube ·relative to the inner socket. Another and, since positive, heretofore preferred manner of securing the inserted locking tubes against accidental escape is to plastically deform each locking tube, after its insertion into one of the inner sockets, so as to bulge a circumferential portions thereof into the annular concavity on the inside of the annular bulge 56 on the associated inner socket 54. This results in a positive securement of the locking tube which definitely will prevent the tube from working loose and becoming displaced from its locking position under vibration or shock. However, bulge-fitting the locking tubes to the inner sockets also has a drawback which makes itself felt whenever it is desired to remove the top nozzle and, consequently, it becomes necessary to remove the locking tubes from their locking positions within the inner sockets. Such removal of the locking tubes requires of course that the bulged-out portions of the latter be dislodged from the annular concavities on the inside of the inner sockets, and dislodging the bulged-out portions by applying the necessary amount of force to the locking tubes usually results in permanent deformation, if not in stripping, of the bulged-out portions which renders the locking tubes unsuitable for re-use; such permanently deformed locking tubes must be discarded and replaced.

Referring now to Figs. 2 and 4 through 7, the invention alleviates the above-mentioned drawback by providing a locking tube 48 which is reusable. The locking tube 48 comprises an elongate tubular metal body 70 which has at least two outwardly protruding dimples 72 preformed thereon during manufacture, that is, before insertion of the locking tube 48 to its locking position. The dimples 72 are preformed by means of any suitable method, such as by die-forming or coining, and they are of generally pyramidal shape such that the metal forming the dimples will· substantially resist yielding and dimensional change regardless of how often the tubular body 70 is moved to and is withdrawn from its locking position. Alternatively, the dimples 72 could be formed by adding material to the tube, such as by spot-welding, in which event the dense concentration of the added material will enable the dimples to resist yielding to deformation-producing forces. Thus, and contrary to the previously discussed locking bulges formed after insertion of the locking tubes, the preformed dimples 72 according to the invention will not yield to deforming forces occurring during removal of the locking tube 48 from its locking position; instead, the whole tubular body 70 of the locking tube 48 will momentarily yield and then spring back to its original shape, it being sufficiently elastically deformable to do so.

The dimples 72 on the outer surface of the tubular body 70 which are diametrically displaced from one another across the tubular body have their outer tips 78 spaced apart a distance which exceeds the inner diameter of the inner socket 54 and the inner diameter of the ledge 66 defined between the upper and lower bores 62, 64 of the adapter-plate passageway 42. Thus, when the locking tube 48 is in its locking position, as shown in Fig. 7, its dimples 72 will extend into the annular concavity on the inside of the circumferential bulge 56 on the inner socket 54 to form an interference fit with the latter or, if the dimples 72 happen to be aligned with two of the elongate slots 60 on the inner socket 54, will nevertheless underlie the ledge 66 in the outer socket 50 and thus, in cooperation therewith, prevent accidental displacement of the locking tube from its locking position. If the locking tube 48 is, as shown in Fig. 6, provided with an outward flare adjacent its upper end, the dimples 72 preferably are preformed on the tubular body 70 at the juncture between the outwardly flared upper end portion 68 and the remaining or main portion of the tubular body 70.

As an example illustrating the small size of the preformed dimples, a locking tube 48 having a tubular body 70 with an outer diameter of 13.8 mm may have diametrically opposed dimples 72 the tips 78 of which are 14.1 mm apart or, in other words, may have dimples 72 each measuring 0.15 mm in height. Dimples this small will suffice to secure the locking tube 48 positively against inadvertent axial displacement from its locking position while, at the same time, enabling the locking tube to be used, removed, and re-used, even repeatedly, without detriment to the structure of the dimples or the locking tube.

## Claims

1. An arrangement for releasably affixing the top nozzle of a reconstitutable nuclear fuel assembly to an upper end portion of a guide thimble, said arrangement comprising an outer socket which extends through an adapter plate of the top nozzle and has a wall with an annular groove circumferentially formed therein, a tubular inner socket defined by said upper end portion of the guide thimble and coaxially received in said outer socket, said tubular inner socket having a circumferential bulge formed on the outer surface thereof and lodged in said annular groove, and having at least one elongate slot extending longitudinally from the upper end of the guide thimble end portion and through said bulge to permit collapse of said tubular inner socket and thereby dislodgement of the bulge from the groove, and a locking tube insertable into a locking position within said tubular inner socket to lock the bulge against dislodgement thereof from the groove, said bulge defining an annular concavity on the inside of the tubular inner socket, and said locking tube including means cooperable with said concavity to prevent inadvertent axial displacement of the locking tube from its locking position, said locking tube being a re-usable locking tube (48) comprising a tubular body (70) which has elastically yieldable walls and an outer diameter enabling the tubular body to be slideably received in said inner socket (54), and at least two dimples (72) protruding at diametrically opposed locations on the outer surface of said tubular body (70) so as, when the locking tube is in its locking position, to extend into said concavity and thereby prevent said inadvertent axial displacement of the locking tube, said dimples (72) being preformed dimples preformed prior to initial insertion of the locking tube into said inner socket, and configured in a manner such that the material of the dimples resists yielding and dimensional change during insertion and removal of the locking tube into and from, respectively, said inner socket.

2. An arrangement according to claim 1, characterized in that each of said dimples (72) is of substantially pyramidal shape.

3. An arrangement according to claim 1 or 2, characterized in that said outer socket (50) consists of an upper bore (62) having a diameter just sufficiently larger than the outer diameter of said tubular body (70) to enable the latter to be slideably received in the upper bore, and a lower bore (64) which is larger in diameter than said upper bore so as to form a ledge (66) at the junction therewith, the lower bore (64) having said annular groove (52) disposed and said inner socket (54) received therein, and said two dimples (72) each having an outer tip (78) which is spaced from the outer tip (78) of the other dimple (72) a distance exceeding the inside diameter of said ledge (66).

4. An arrangement according to claim 1, 2 or 3, characterized in that said tubular body of the locking tube (48) has an outwardly flared portion (68) adjacent the end thereof which is its trailing end during insertion of the locking tube into said inner socket (54), said dimples (72) being preformed at the junction of said outwardly flared portion with the remainder of said tubular body (70).

## Patentansprüche

1. Eine Vorrichtung zum lösbaren Anbringen der Kopfdüse einer wiederherstellbaren Kernbrennstoffanordnung an ein oberes Endstück einer Führungsmuffe, wobei die Vorrichtung aus einem äußeren Rohrstutzen besteht, der durch eine Adapterplatte der Kopfdüse gesteckt ist und eine Wand mit einer umlaufenden ringförmigen Auskehlung aufweist, ein durch das obere Endstück der Führungsmuffe bestimmter rohrförmiger Innenstutzen coaxial im äußeren Rohrstutzen eingesetzt ist, und an seiner Außenfläche ein umlaufender Wulst vorgesehen ist, der in die ringförmige Auskehlung eingreift und mit mindestens einem länglichen Schlitz versehen ist, der vom oberen Ende der Führungsmuffe ausgeht und sich in Längsrichtung und durch den Wulst erstreckt, um ein Zusammenfallen des rohrförmigen Innenstutzens und damit ein Verschieben des Wulstes aus der Auskehlung zu gestatten und ferner ein Verriefelungsrohr in eine Verriegelungsstellung innerhalb des rohrförmigen Innenstutzens einsetzbar ist, um ein Verschieben des Wulstes aus der Auskehlung zu sperren, wobei durch den Wulst eine ringförmige Vertiefung an der Innenseite des rohrförmigen Innenstutzens begrenzt ist, und das Verriegelungsrohr Mittel aufweist, die mit der Vertiefung zusammenwirken und eine unbeabsichtigte Axialverschiebung des Verriegelungsrohres aus der Sperrstellung verhindern, wobei das Verriegelungsrohr ein wiederverwendbares Verriegelungsrohr (48) ist, daß aus einem Rohrkörper (70) mit federnd nachgiebigen Wänden besteht und einen Außendurchmesser aufweist, der ein gleitendes Einsetzen des Rohrkörpers in den Innenstutzen (54) gestattet, und mindestens zwei Warzen (72) diametral entgegengesetzt and der Außenwand des Rohrkörpers (70) vorgesehen ist, derart, daß sie bei in Verriegelungsstellung befindlichem Verriegelungsrohr in die Hohlrundung eingreifen und dabei eine unbeabsichtigte Axialverschiebung des Verriegelungsrohres sperren, wobei die Warzen (72) vor dem ersten Einsetzen des Verriegelungsrohres in den Innenstutzen vorgeformt und so gestaltet sind, daß das Material der Warzen weder nachgibt noch einer Dimensionsänderung unterliegt, wenn das Verriegelungsrohr in den Innenstutzen eingesetzt oder daraus entfernt ist.

2. Vorrichtung nach Anspruch 1, dadurch gekennzeichnet, daß jede Warze (72) im wesentlichen pyramidenförmig gestaltet ist.

3. Vorrichtung nach Anspruch 1 oder 2, dadurch gekennzeichnet, daß der Außenstutzen (50) eine obere Bohrung (62) aufweist, deren Durchmesser gerade ausreichend größer ist als der Außendurchmesser des Rohrkörpers (70), um diesen gleitend in die obere Bohrung einzustecken, und ferner mit einer unteren Bohrung (64) versehen ist, deren Durchmesser größer ist als derjenige der oberen Bohrung, derart, daß an der Verbindungsstelle ein Absatz (66) gebildet ist, wobei in der unteren Bohrung (64) die ringförmige Hohlrundung (52) angeordnet und der Innenstutzen (54) darin aufgenommen wird, und jede der beiden Warzen (72) eine äußere Spitze (78) aufweist, wobei der Abstand zwischen der äußeren Spitze (78) der einen Warze und der äußeren Spitze (78) der anderen Warze (72) größer ist als der Innendurchmesser des Absatzes (66).

4. Vorrichtung nach Anspruch 1, 2 oder 3, dadurch gekennzeichnet, daß der Rohrkörpers des Verriegelungsrohres (48) nahe seines Endes einen nach außen erweiternden Abschnitt (68) aufweist, der während des Einsetzens des Verriegelungsröhres in den Innenstutzen (54) das rückwärtige Ende bildet und die Warzen (72) an der Verbindungsstelle des nach außen erweiterten Abschnitts mit dem restlichen Stück des Rohrkörpers (70) vorgeformt sind.

**Revendications**

1. Agencement destiné à fixer, avec la faculté de la libérer, l'embout supérieur d'un assemblage combustible nucléaire reconstituable à une partie d'extrémité supérieure d'une chaussette de guidage, ledit agencement comprenant une emboîture extérieure qui s'étend à travers une plaque d'adaptateur de l'embout supérieur et possède une paroi munie d'une gorge annulaire qui y est ménagée dans le sens circonférentiel, une douille intérieure tubulaire définie par ladite partie formant extrémité supérieure de la chaussette de guidage et reçue coaxialement dans ladite emboîture extérieure, ladite douille tubulaire intérieure possédant un bourrelet circonférentiel constitué sur la surface extérieure de cette douille et logé dans ladite gorge annulaire, et possédant au moins une fente allongée s'étendant longitudinalement à partir de l'extrémité supérieure de la partie d'extrémité de la chaussette de guidage et traversant ledit bourrelet de façon à permettre à ladite douille intérieure tubulaire de s'aplatir et par ce moyen de permettre au bourrelet d'être délogé de la gorge, et un tube de verrouillage ayant la faculté d'être inséré en position de verrouillage dans ladite douille intérieure tubulaire de façon à verrouiller le bourrelet et l'empêcher d'être délogé de la gorge, ledit bourrelet définissant une concavité annulaire sur le côté intérieur de la douille intérieure tubulaire, et ledit tube de verrouillage comprenant des moyens qui coopèrent avec ladite concavité pour empêcher un déplacement axial accidentel du tube de verrouillage depuis sa position de verrouillage, ledit tube de verrouillage étant un tube (48) de verrouillage réutilisable et comportant un corps tubulaire (70) dont les parois sont déformables élastiquement et dont le diamètre extérieur permet au corps tubulaire de trouver sa place, avec la faculté de coulisser, dans ladite douille intérieure (54), et au moins deux bossages (72) faisant saillie à des emplacements diamétralement opposés sur la surface extérieure dudit corps tubulaire (70) de manière, lorsque le tube de verrouillage est à sa position de verrouillage, à s'étendre à l'intérieur de ladite concavité et par suite à empêcher le déplacement axial accidentel précité du tube de verrouillage, lesdits bossages (72) étant des bossages préformés constitués préalablement à l'insertion initiale du tube de verrouillage dans ladite douille intérieure, et réalisés d'une manière telle que le matériau des bossages résiste aux deformations et aux changements de dimensions pendant respectivement l'insertion du tube de verrouillage dans ladite douille intérieure et son évacuation de cette douille.

2. Agencement selon la revendication 1, caractérisé en ce que chacun desdits bossages (72) a une forme sensiblement pyramidale.

3. Agencement selon les revendications 1 ou 2, caractérisé en ce que ladite emboîture extérieure (50) est constituée par un alésage supérieur (62) dont le diamètre est plus grand que le diamètre extérieur dudit corps tubulaire (70) juste assez pour permettre à ce dernier de trouver sa place dans l'alésage supérieur avec la faculté de coulisser, et un alésage inférieur (64) qui a un diamètre plus grand que ledit alésage supérieur de façon à constituer un épaulement (66) à sa jonction avec lui, l'alésage inférieur (64) étant pourvu de ladite gorge annulaire (52) qui y est ménagée et de ladite douille intérieure (54) qui y trouve sa place à l'intérieur, et lesdits deux bossages (72) ayant chacun une extrémité extérieure (78) qui est espacée de l'extrémité extérieure (78) de l'autre bossage (72) d'une distance supérieure au diamètre intérieur dudit épaulement (66).

4. Agencement selon les revendications 1, 2 ou 3, caractérisé en ce que ledit corps tubulaire du tube (48) de verrouillage possède une partie (68) évasée vers l'extérieur à proximité de l'extrémité de ce tube qui est son extrémité arrière pendant l'insertion du tube de verrouillage dans ladite douille intérieure (54), lesdits bossages (72) étant préformés à la jonction de ladite partie évasée vers l'extérieur avec le reste dudit corps tubulaire (70).

FIG.1

FIG. 2

FIG. 3

FIG. 4

FIG. 5

FIG. 6

FIG. 7